# EUROPEAN PATENT SPECIFICATION

(11) **EP 1 719 644 B1**
(45) Date of publication and mention of the grant of the patent: **24.09.2008**
(21) Application number: 06009338.2
(22) Date of filing: 05.05.2006
(51) Int. Cl.: B60G 17/016

(54) **Anti-roll bar, and system for its actuation**
Antirollstab und System zu seiner Betätigung
Barre anti-devers, et système pour sa mise en action

(30) Priority: 06.05.2005 IT TO20050308
(43) Date of publication of application: 08.11.2006
(73) Proprietor: FIAT AUTO S.p.A., 10135 Torino (IT)
(72) Inventor: Rostagno, Idi Luigi, 10135 Torino (IT)
(74) Representative: Lotti, Giorgio

(56) References cited:
- WO-A-20/04076210
- DE-C- 968 975
- DE-C1- 19 533 478
- FR-A- 768 876
- US-A- 1 971 960
- PATENT ABSTRACTS OF JAPAN vol. 2000, no. 14, 5 March 2001 (2001-03-05) -& JP 2000 313218 A (NISSAN MOTOR CO LTD), 14 November 2000 (2000-11-14)
- PATENT ABSTRACTS OF JAPAN vol. 016, no. 021 (M-1201), 20 January 1992 (1992-01-20) -& JP 03 235706 A (TOYOTA MOTOR CORP), 21 October 1991 (1991-10-21)
- PATENT ABSTRACTS OF JAPAN vol. 016, no. 191 (M-1245), 8 May 1992 (1992-05-08) & JP 04 027615 A (NISSAN MOTOR CO LTD), 30 January 1992 (1992-01-30)
- PATENT ABSTRACTS OF JAPAN vol. 016, no. 002 (M-1197), 7 January 1992 (1992-01-07) -& JP 03 227714 A (MAZDA MOTOR CORP), 8 October 1991 (1991-10-08)
- PATENT ABSTRACTS OF JAPAN vol. 016, no. 002 (M-1197), 7 January 1992 (1992-01-07) -& JP 03 227713 A (MAZDA MOTOR CORP), 8 October 1991 (1991-10-08)

## Description

The present invention relates to an active anti-roll bar for the rear suspension of a motor vehicle and to its actuation system. The invention applies in particular to a rear axle of the type with interconnected wheels.

The dynamic behaviour of the vehicle is determined by the roll stiffness of the suspensions of the two axles and by their ratio. As is known to persons skilled in the branch, if the stabilizing roll stiffness of the rear axle is increased by using a more rigid anti-roll bar, see for example JP 2000 313 218, JP 03 235 706, DE 968 975 or FR 768 876, the vehicle is rendered more oversteering and hence with characteristics of dynamic behaviour that resemble more those of a sports car.

Since the anti-roll bar acts in conditions of asymmetrical shimmying on bends, it does not affect the stiffness of the suspension when travelling in a straight line and hence enables an acceptable travelling comfort to be maintained.

The possibility of adjusting in a continuous or discrete way the stiffness of the rear anti-roll bar in the suspension of a motor vehicle enables variation of setting of the attitude of the vehicle between a style of driving that is more or less sporting.

In state-of-the-art solutions, the possibility of modifying the torsional rigidity of the anti-roll bar is entrusted to linear or rotational actuators, which counteract the movement of the bar itself induced by rolling of the car by applying forces at its ends see, for example, DE 195 33 478 (in the case of linear actuators), or by countering the rotation of their central part divided into two portions (in the case of rotational actuators), see for example, WO 2004/076210. These devices have a high cost and are heavy in so far as the actuators, at the moment of adjustment of the stiffness of the bar, must counteract the thrust of the bar itself.

Other simpler systems envisage, instead, the possibility to vary the torsional rigidity of the bar, modifying its path (by variation or replacement of the median stretch), or to change the position of the twisting section, causing translation of the bar on its constraints.

Whereas for the solutions described above the variation in stiffness of the anti-roll bar could be obtained even with the vehicle moving, in these latter simpler solutions the adjustment is made exclusively with the vehicle stationary.

The purpose of the present invention is to overcome the aforesaid drawbacks by providing a system for adjustment of the stiffness of the torsion bar that will be of low cost and weight and will enable its actuation even when the vehicle is moving.

The aforesaid purpose is achieved by the present invention, the subject of which is a system for adjustment of the stiffness of a torsion bar that present the characteristics specified in Claim 1.

Further characteristics and advantages will emerge clearly from the ensuing description, with reference to the annexed plate of drawings, which are provided purely by way of non-limiting example and in which:

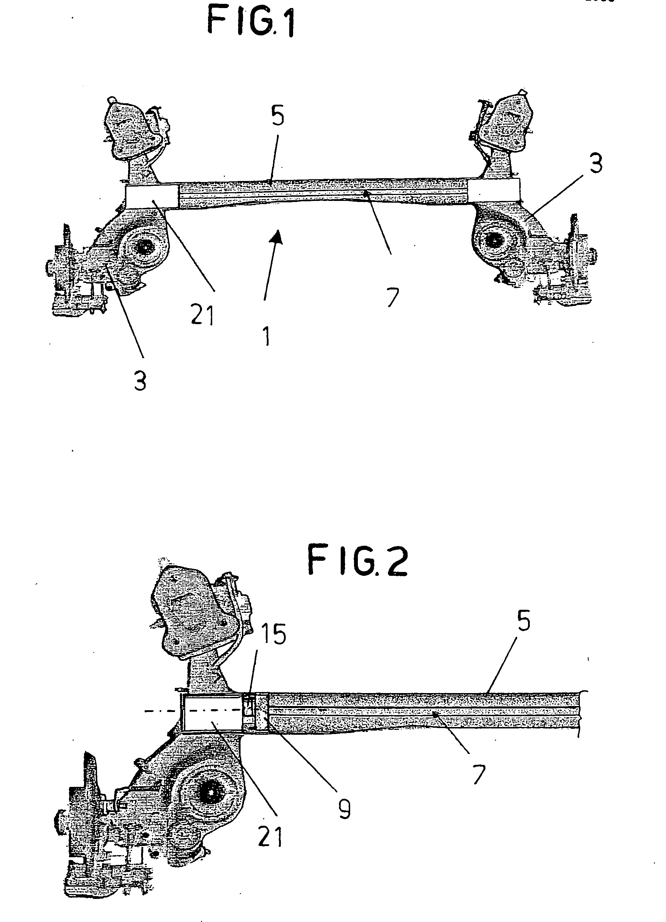

- Figure 1 is a top plan view of a rear suspension of a motor vehicle provided with the bar according to the invention and its actuating system;
- Figure 2 is a more detailed, enlarged view of one side of the suspension of Figure 1;

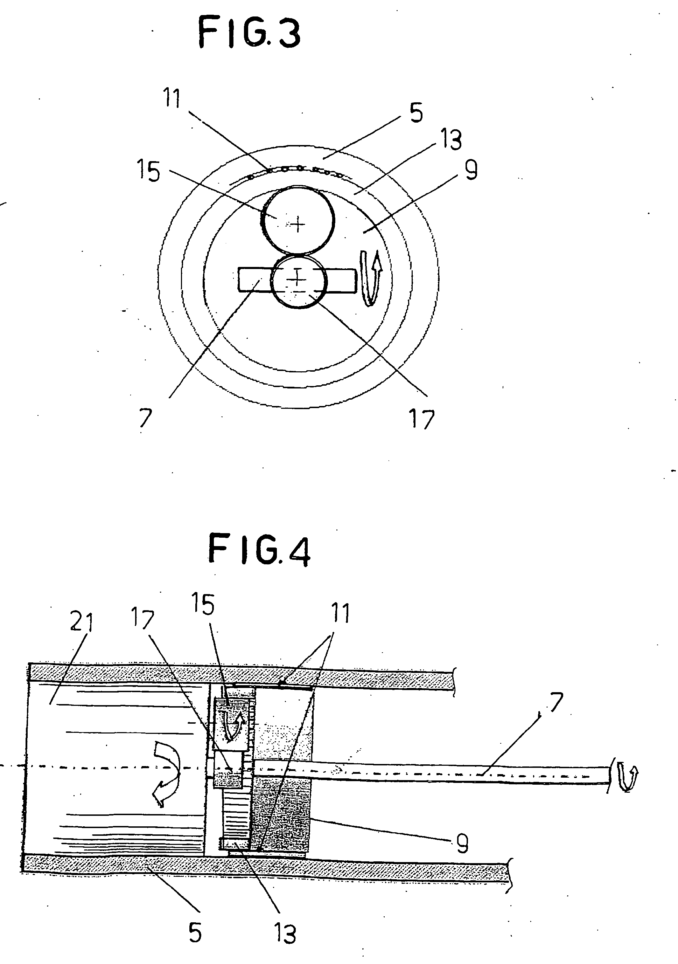

- Figure 3 is a schematic front view of the bar according to the invention and of part of its actuation system; and
- Figure 4 is a schematic side view of part of the torsion bar of the invention and of its adjustment system.

With general reference to the figures, designated by 1 is the rear suspension of a motor vehicle of the type with interconnected wheels, constituted by two longitudinal arms 3 connected to one another by a transverse twisting axle 5, obtained using a metal tube open at its ends. Inserted within the axle 5 is a torsion bar 7, constituted by a metal plate having a rectangular cross section. The two ends of the torsion bar 7 are fixed to two cylindrical parts, referred to herein as rotors 9, which are designed to turn within the axle 5 via the interposition of bearings 11, preferably smooth or of the roller type, between the rotors and the internal surface of the axle 5. The rotors each present, facing the ends of the axle 5, an internal gear 13, the internal teeth of which mesh with a reduction gear 15 supported in rotation by the respective rotor. The reduction gear 15 meshes with a driving gear 17 fitted on the output shaft 19 of a rotational actuator 21 for each side of the axle 5 and hence for each end of the torsion bar 7, which, in the application described, is an electric motor.

The electric actuator can be driven by an electronic control unit, integrated with other control systems of the vehicle, using for example, as input signal, the attitude angle of the vehicle or else the angular velocity of the wheels of the two axles.

In the solution proposed by the invention, the variation of roll stiffness of the suspension is provided by varying the angular position of the leaf shaped torsion bar 7. The different torsional rigidity that the rectangular section makes possible according to the angular position with respect to its longitudinal axis enables a continuous variation of roll stiffness from a minimum to a maximum, performing a rotation through 90°of the section of the bar itself.

Of course, numerous variant embodiments of the actuator device are possible, without thereby departing from the sphere of protection of the annexed claims. Thus, for example, it will be possible to install hydraulic actuators instead of electric actuators to provide rotational movement of the bar, of course by means of a suitable device for transmitting motion, thus enabling an additional mechanical thrust to be exerted to achieve a higher torsional rigidity of the bar.

In addition, it will be possible to position the bar outside the twisting axle in the case where the latter is not made using a tube.

## Claims

1. Active torsion bar (7) set within the twisting axle of a rear axle (1) of a motor vehicle, the rear axle (1) presenting two longitudinal arms (3) connected by said transverse twisting axle (5) made of a metal tube open at its ends, said active torsion bar (7) being a leaf-shaped torsion bar (7) presenting a rectangular cross section and comprising a system for adjustment of its stiffness by varying the angular position of said active leaf-shaped torsion bar (7) for the rear axle (1) by means of actuators (21), **characterized in that** said actuators (21) are two rotational actuators, each of the actuators (21) is set at each end of the bar (7) and is connected to the torsion bar by means of a reduction gear chain (13,15,17), the actuators (21) being designed to cause rotation of said bar (7) about its longitudinal axis through an angle of at least 90°.

2. Active torsion bar according to claim 1, **characterized in that** the two rotational actuators fixed at the ends of the bar (7) are rotors (9) which turn on bearings (11) arranged within the rear axle (1).

## Patentansprüche

1. Aktive Stabilisatorstange (7), die in der Torsionsachse einer Hinterachse (1) eines Kraftfahrzeugs eingerichtet ist, wobei die Hinterachse (1) zwei Längsarme (3) aufweist, die durch die Quertorsionsachse (5) verbunden sind, die aus einem an seinem Enden offenen Metallrohr hergestellt ist, wobei die aktive Stabilisatorstange (7) eine blattförmige Stabilisatorstange (7) ist, die einen rechteckigen Querschnitt aufweist und ein System zum Anpassen ihrer Steifigkeit durch Variieren der Winkelposition der aktiven blattförmigen Stabilisatorstange (7) für die Hinterachse (1) durch Stellantriebe (21) aufweist, **dadurch gekennzeichnet, dass** die Stellantriebe (21) zwei Drehstellantriebe sind, von welchen jeder Stellantrieb (21) an jedem Ende der Stange (7) eingerichtet und mit der Stabilisatorstange mittels eines Untersetzungskettengetriebes (13, 15, 17) verbunden ist, wobei die Stellantriebe (21) konzipiert sind, um das Drehen der Stange (7) um ihre Längsachse durch einen Winkel von mindestens 90° zu bewirken.

2. Aktive Stabilisatorstange nach Anspruch 1, **dadurch gekennzeichnet, dass** die zwei Drehstellantriebe, die an den Enden der Stange (7) befestigt sind, Rotoren (9) sind, die auf Lagern (11) drehen, die innerhalb der Hinterachse (1) eingerichtet sind.

## Revendications

1. Barre de torsion active (7) placée à l'intérieur de l'essieu de torsion d'un essieu arrière (1) d'un véhicule motorisé, l'essieu arrière (1) présentant deux bras longitudinaux (3) reliés par ledit essieu de torsion transversal (5) fait d'un tube métallique ouvert au niveau de ses extrémités, ladite barre de torsion active (7) étant une barre de torsion en forme de lame (7) présentant une section transversale rectangulaire et comprenant un système pour le réglage de sa raideur en variant la position angulaire de ladite barre de torsion active en forme de lame (7) pour l'essieu arrière (1) au moyen d'actionneurs (21), **caractérisée en ce que** lesdits actionneurs (21) sont deux actionneurs rotatifs, chacun des actionneurs (21) est placé au niveau de chaque extrémité de la barre (7) et est relié à la barre de torsion au moyen d'une chaîne à engrenage de réduction (13, 15, 17), les actionneurs (21) étant conçus pour entraîner la rotation de ladite barre (7) autour de son axe longitudinal sur un angle d'au moins 90°.

2. Barre de torsion active selon la revendication 1, **caractérisée en ce que** les deux actionneurs rotatifs fixés au niveau des extrémités de la barre (7) sont des rotors (9) qui font tourner des paliers (11) agencés à l'intérieur de l'essieu arrière (1).
